(19) Europäisches Patentamt / European Patent Office / Office européen des brevets

(11) **EP 3 686 733 B1**

(12) **EUROPEAN PATENT SPECIFICATION**

(45) Date of publication and mention of the grant of the patent:
**03.08.2022 Bulletin 2022/31**

(21) Application number: **19218090.9**

(22) Date of filing: **19.12.2019**

(51) International Patent Classification (IPC):
**G06N 3/063** (2006.01)   **G06N 3/08** (2006.01)
**G06F 7/02** (2006.01)   **G06N 3/04** (2006.01)

(52) Cooperative Patent Classification (CPC):
**G06F 7/02; G06N 3/0481; G06N 3/063; G06N 3/084;** G06F 2207/4824

(54) **CALCULATION PROCESSING APPARATUS, PROGRAM, AND METHOD OF CONTROLLING THE CALCULATION PROCESSING APPARATUS**

BERECHNUNGSVERARBEITUNGSVORRICHTUNG, PROGRAMM UND VERFAHREN ZUR STEUERUNG DER BERECHNUNGSVERARBEITUNGSVORRICHTUNG

PROCÉDÉ DE TRAITEMENT DE CALCUL, PROGRAMME ET PROCÉDÉ DE COMMANDE DE L'APPAREIL DE TRAITEMENT DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2019 JP 2019009395**

(43) Date of publication of application:
**29.07.2020 Bulletin 2020/31**

(73) Proprietor: **FUJITSU LIMITED**
**Kanagawa 211-8588 (JP)**

(72) Inventor: **NOTSU, Takahiro**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(56) References cited:
• **LAU MIAN MIAN ET AL: "Review of Adaptive Activation Function in Deep Neural Network", 2018 IEEE-EMBS CONFERENCE ON BIOMEDICAL ENGINEERING AND SCIENCES (IECBES), IEEE, 3 December 2018 (2018-12-03), pages 686-690, XP033514246, DOI: 10.1109/IECBES.2018.8626714 [retrieved on 2019-01-24]**
• **CHIGOZIE NWANKPA ET AL: "Activation Functions: Comparison of trends in Practice and Research for Deep Learning", ARXIV.ORG, CORNELL UNIVERSITY LIBRARY, 201 OLIN LIBRARY CORNELL UNIVERSITY ITHACA, NY 14853, 8 November 2018 (2018-11-08), XP081047717,**
• **JORGE ALBERICIO ET AL: "Cnvlutin : ineffectual-neuron-free deep neural network computing", ACM SIGARCH COMPUTER ARCHITECTURE NEWS, vol. 44, no. 3, 18 June 2016 (2016-06-18), pages 1-13, XP055646887, 2 Penn Plaza, Suite 701 New York NY 10121-0701 USA ISSN: 0163-5964, DOI: 10.1145/3007787.3001138**

**Description**

FIELD

The embodiment discussed herein is related to a calculation processing apparatus, a computer-readable recording medium, and a method of controlling the calculation processing apparatus.

BACKGROUND

In a processor executing deep learning (DL) at high-speed, many calculating units are mounted to execute parallel calculations. Since all the calculating units execute the same calculations in parallel calculations, power of the entirety of many calculating units may suddenly vary depending on content of data and the types of instructions to be executed.

Since the processor operates under the same voltage conditions, the current increases as the power increases. Normally, a direct current (DC) to DC converter follows the increase in current. However, when the variation occurs suddenly, the DC to DC converter does not necessarily follow the increase in current. This may lead to the voltage drops.

When the voltage supplied to the processor drops, the switching speed of the semiconductor reduces, and the timing constraint is not necessarily satisfied. This may lead to malfunction of the processor.

Related technologies are disclosed in, for example, International Publication Pamphlet No. WO 2017/038104, Japanese Laid-open Patent Publication No. 11-224246, M. M. Lau and K. Hann Lim, "Review of Adaptive Activation Function in Deep Neural Network," 2018 IEEE-EMBS Conference on Biomedical Engineering and Sciences (IECBES), Sarawak, Malaysia, 2018, pp. 686-690, and C. Nwankpa et al. "Activation Functions: Comparison of trends in Practice and Research for Deep Learning," ArXiv: 1811.03378, 8 November 2018.

Although the malfunction of the processor due to the voltage drop may be addressed by setting the continuous voltage to a higher value, there is a problem in that setting a higher continuous voltage may increase the power consumption.

In an aspect, it is desired to suppress voltage drop of the processor without increasing power consumption.

SUMMARY

Aspects of the invention are set out in the accompanying claims.

BRIEF DESCRIPTION OF DRAWINGS

FIG. 1 illustrates a modeling of neurons in a related example;

FIG. 2 illustrates a first example of power variation according to the types of instructions in the related example;

FIG. 3 illustrates a second example of the power variation according to the types of instructions in the related example;

FIG. 4 illustrates a third example of the power variation according to the types of instructions in the related example;

FIG. 5 illustrates the third example of the power variation according to the types of instructions in the related example;

FIG. 6 illustrates first rectified linear unit (ReLU) operation processing in an example of an embodiment;

FIG. 7 illustrates first forward propagation processing and first backward propagation processing of an ReLU in the example of the embodiment;

FIG. 8 illustrates second ReLU operation processing in the example of the embodiment;

FIG. 9 illustrates second forward propagation processing and second backward propagation processing of the ReLU in the example of the embodiment;

FIG. 10 illustrates third ReLU operation processing in the example of the embodiment;

FIG. 11 illustrates third forward propagation processing and third backward propagation processing of the ReLU in the example of the embodiment;

FIG. 12 is a block diagram schematically illustrating an example of the configuration of a multiplying unit in the example of the embodiment;

FIG. 13 is a block diagram schematically illustrating an example of the configuration of a calculation processing system in the example of the embodiment;

FIG. 14 is a block diagram illustrating deep learning (DL) processing in the calculation processing system illustrated in FIG. 13;

FIG. 15 is a flowchart illustrating the DL processing in a host machine illustrated in FIG. 13;

FIG. 16 is a block diagram schematically illustrating an example of a hardware configuration in the host machine illustrated in FIG. 13;

FIG. 17 is a block diagram schematically illustrating an example of a hardware configuration of the DL execution hardware illustrated in FIG. 13;

FIG. 18 is a block diagram schematically illustrating an example of a functional configuration of the host machine illustrated in FIG. 13;

FIG. 19 is a flowchart illustrating processing for generating programs in the host machine illustrated in FIG. 13;

FIG. 20 is a flowchart illustrating the details of processing for generating forward propagation and backward propagation programs in the host machine illustrated in FIG. 13;

FIG. 21 is a flowchart illustrating the details of the forward propagation processing of the second ReLU operation in the host machine illustrated in FIG. 13;

FIG. 22 is a flowchart illustrating the details of the backward propagation processing of the second ReLU operation in the host machine illustrated in FIG. 13;

FIG. 23 is a flowchart illustrating the details of the forward propagation processing of the third ReLU operation in the host machine illustrated in FIG. 13; and

FIG. 24 is a flowchart illustrating the details of the backward propagation processing of the third ReLU operation in the host machine illustrated in FIG. 13.

DESCRIPTION OF EMBODIMENTS

Hereinafter, an embodiment will be described with reference to the drawings. However, the embodiment described hereinafter is merely exemplary and is not intended to exclude various modifications and technical applications that are not explicitly described in the embodiment. For example, the present embodiment is able to be carried out with various modifications without departing from the gist of the present embodiment.

The drawings are not intended to illustrate that only the drawn elements are provided, but the embodiments may include other functions and so on.

Hereinafter, in the drawings, like portions are denoted by the same reference signs and redundant description thereof is omitted.

[A] Related Example

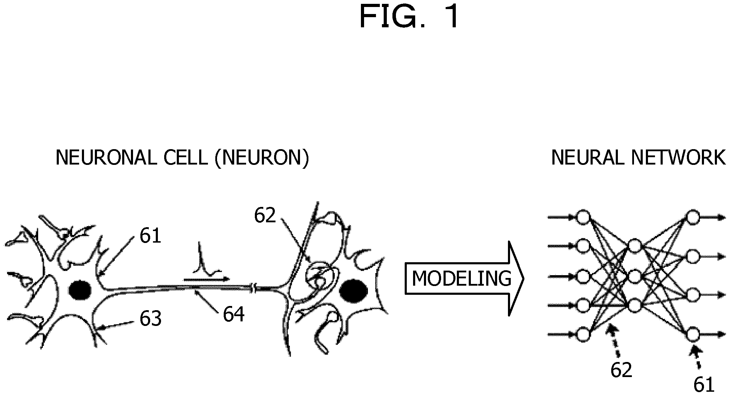

FIG. 1 illustrates a modeling of neurons in a related example.

It has been found that a deep neural network in which a neural network is expanded to multiple layers is applicable to problems that have been difficult to solve in existing manners. It is expected that the deep neural network is applied to various fields.

As illustrated in FIG. 1, neuronal cells (for example, "neurons") of the brain include cell bodies 61, synapses 62, dendrites 63, and axons 64. The neural network is generated by mechanically modeling the neural cells.

Although calculations in deep neural network learning processing are simple, such as inner product calculations, but executed in a large volume in some cases. Accordingly, in a processor that executes these calculations at high speed, many calculating units are operated in parallel so as to improve performance.

In the calculating units that execute the learning processing of the deep neural network, power in all the calculating units may steeply vary depending on the types of instructions to be executed or the content of data.

For example, an integer add instruction (for example, an "add arithmetic instruction") consumes a smaller amount of the power than that consumed by a floating-point multiply-add instruction (for example, "fused multiply-add (FMA) arithmetic instruction"). The reason for this is that resources used in the processor are different depending on the types of instructions. Although only a single adding unit is used for the integer add instruction, a plurality of adding units for executing multiplication or an adding unit having a larger bit width are used for the floating-point multiply-add instruction.

Since what instructions are executed is known in advance, the power variation in power depending on the types of instructions is able to be addressed. For example, when the integer add instruction is executed in a subset of sections of a program in which the floating-point multiply-add instruction is dominant, the integer add instruction and the floating-point multiply-add instruction are alternately executed. As a result, the power variation is able to be generally suppressed.

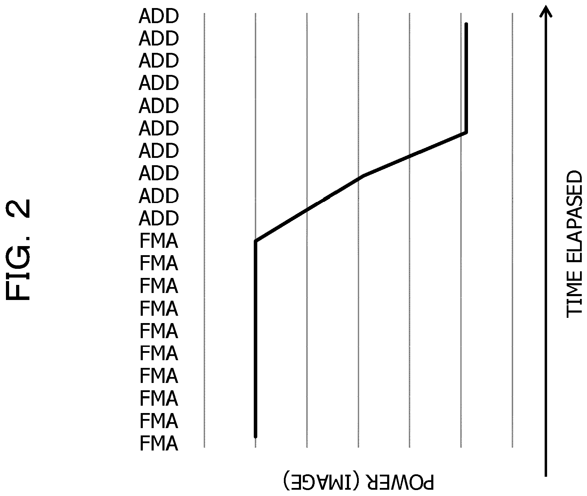

FIG. 2 illustrates a first example of the power variation according to the types of instructions in the related example.

In an example illustrated in FIG. 2, after ten (10) FMA arithmetic instructions have been executed, ten (10) ADD arithmetic instructions are executed. In such an instruction sequence, when the FMA arithmetic instruction is switched to the ADD arithmetic instruction, a reduction in power occurs.

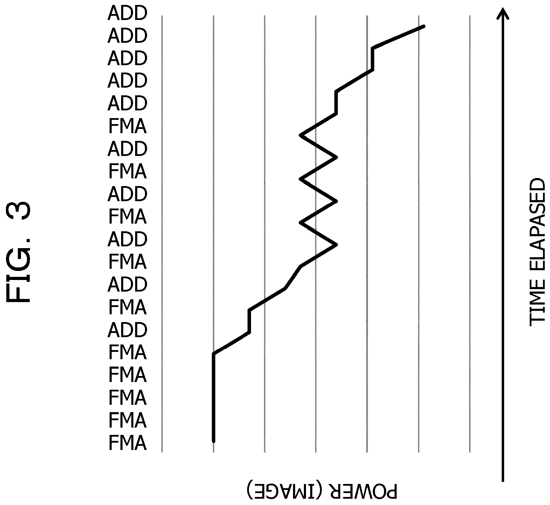

FIG. 3 illustrates a second example of the power variation according to the types of instructions in the related example.

In an example illustrated in FIG. 3, after five (5) FMA arithmetic instructions have been executed, the ADD arithmetic instruction and the FMA arithmetic instruction are alternately executed. When the FMA arithmetic instruction and the ADD arithmetic instruction are executed in an interlaced manner as described above, a sudden reduction of the power is able to be suppressed.

Even when the same floating-point multiply-add instruction is executed, continuous input of 0 as content of data reduces the power. The input data is, in many cases, changed to 0 or 1 in a certain ratio. However, when the same value is continuously input, a state of a logic element is fixed, and the power reduces. For example, with a 0 value, in multiplication, the same result, 0, is returned for any value input to the other operand. Thus, there is a strong tendency that the number of times of switching is reduced.

Since it is unclear in advance that what kind of data is input, it is not easy to address the power variation in accordance with the content of the data.

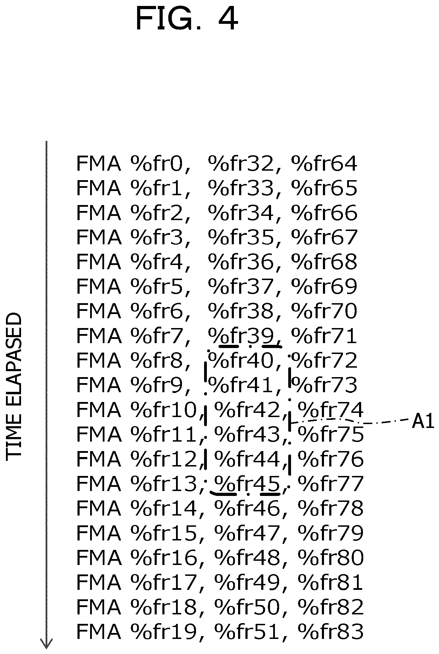

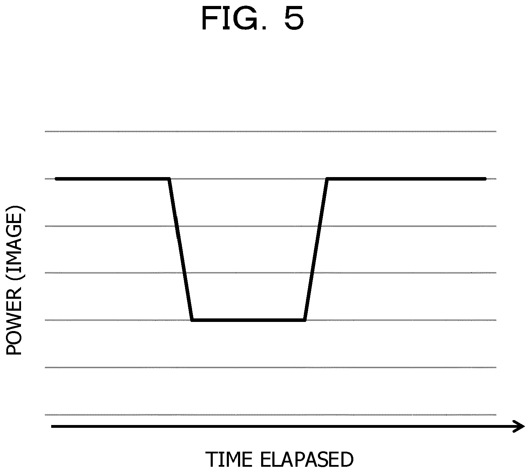

FIGs. 4 and 5 illustrate a third example of the power variation according to the types of instructions in the related example.

As indicated by a reference sign A1 in FIG. 4, 0s are stored as an instruction sequence from 40th ("% fr40" in the illustrated example) to 45th ("%fr45" in the illustrated example) flag registers. As illustrated in FIG. 5, when a calculation using 0 is executed, the power reduces in this period.

As described above, the power variation of the processor is caused in accordance with the types of instructions or in accordance with the data read by the instructions. For example, the power consumption of the integer add instruction is low and the power consumption of the floating-point multiply-add instruction is high. Furthermore, the power consumption of the same floating-point multiply-add instruction reduces when 0 is input.

Since the instructions to be executed are known when a program is written, the power variation caused by the difference in the types of instructions is avoidable by combination of the instructions.

In contrast, since the content of operands is unknown when a program is written, the power variation caused in accordance with the data for the instructions is not easily addressed. For example, when 0 is continuously input, most of the values in the calculating unit are fixed to 0, thereby the power suddenly reduces.

[B] An Example of the Embodiment

[B-1] An Example of A System Configuration

In deep learning (DL), most of processing is dedicated to executing the multiply-add instruction and obtaining inner products. In so doing, when 0 continuously appears in the input, the input at the time of execution of the multiply-add instruction suddenly reduces. This may cause malfunction.

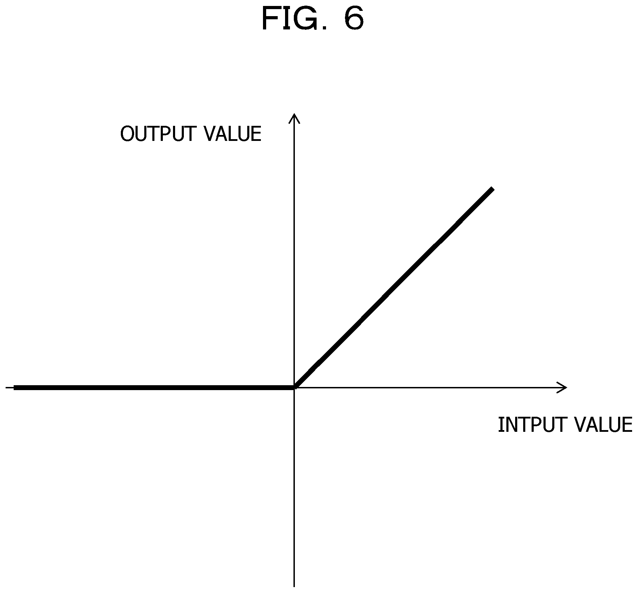

FIG. 6 illustrates processing for a first rectified linear unit (ReLU) operation.

Processing called an ReLU operation explicitly generates 0 in learning processing of the DL. The ReLU operation receives a single input and generates a single output. As illustrated in FIG. 6 and represented by Expression 1 below, when a given input value is positive, the input value is output as it is. When the input value is 0 or negative, 0 is output.

$$\mathrm{ReLU}(x) = \begin{cases} x \ (x > 0) \\ 0 \ (x \leq 0) \end{cases} \quad \text{Expression 1}$$

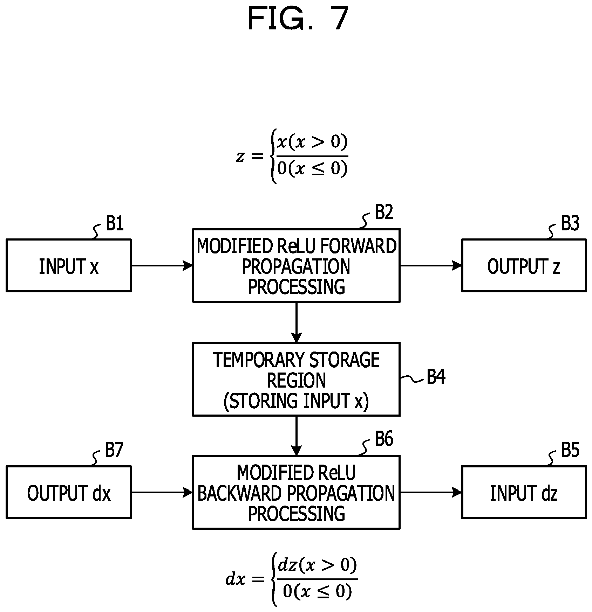

FIG. 7 illustrates first forward propagation processing and first backward propagation processing of the ReLU in an example of the embodiment.

As illustrated in FIG. 7, an input x (see reference sign B1) of forward propagation is converted into an output z (see reference sign B3) by modified ReLU forward propagation processing (see reference sign B2). The relationship between the input x and the output z is expressed by Expression 2 below.

$$z = \begin{cases} x \ (x > 0) \\ 0 \ (x \leq 0) \end{cases} \quad \text{Expression 2}$$

The input x of the forward propagation is stored in a temporary storage region until the backward propagation (see reference sign B4) is performed.

An input dz (see reference sign B5) of the backward propagation is converted into an output dx (see reference sign B7) by modified ReLU backward propagation processing (see reference sign B6) that refers to the input x in the temporary storage region. Here, the relationship between the input dz and the output dx is expressed by Expression 3 below.

$$dx = \begin{cases} dz \ (x > 0) \\ 0 \ (x \leq 0) \end{cases}$$ Expression 3

However, with the ReLU (x) illustrated in Expression 1, when the input x is a negative value, the output is normally 0. Thus, the likelihood of the output being 0 is high.

Accordingly, for the example of the present embodiment, when the input x is a negative value, a negative slope having an inclination of a small positive number ($\varepsilon$) may be set. When the input x is a negative value, any one of a small negative number (-$\varepsilon$), a 0 value (0), and a small positive number (+$\varepsilon$) may be randomly output.

A small positive number ($\varepsilon$) may have a small absolute value, and a bit of 1 may be set to a certain extent (for example, in half or more of digits). For example, two of "0x00FFFFFF" and "0x00CCCCCC" may be used as candidates. "0x00FFFFFF" is a number which is close to a value FLT_MIN larger than 0 and the mantissa of which is entirely 1. "0x00CCCCCC" is a number which is close to the value FLT_MIN larger than 0 and in which 0 and 1 are alternately appear in the mantissa.

With either of the method in which a negative slope is set or the method in which a value is randomly output, a non-zero value may be used instead of 0. Thus, operation results may be different from the example illustrated in FIG. 6. However, in DL processing, as long as the forward propagation processing (for example, "forward processing") and the backward propagation processing (for example, "backward processing") are consistent with each other, learning is possible even when processing different from that of the original calculation is executed.

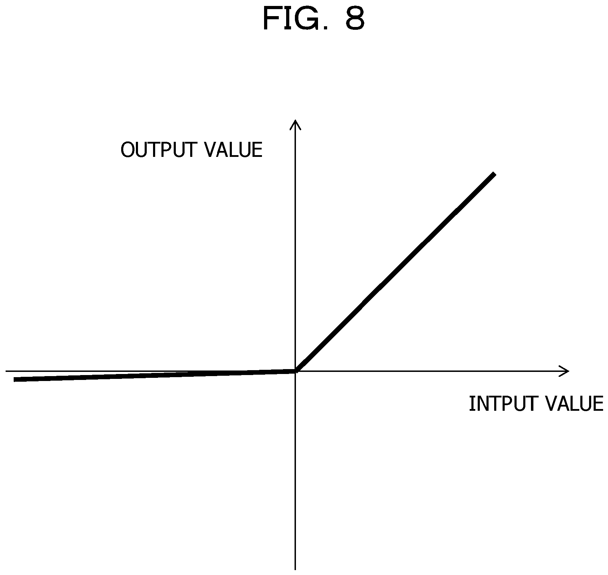

FIG. 8 illustrates a second ReLU operation processing in the example of the embodiment.

As illustrated in FIG. 8, the negative slope indicates an inclination in a negative region. When the negative slope is 0, the processing is similar to that of the ReLU processing illustrated in FIG. 6.

In the example illustrated in FIG. 8, the negative value is set to $\varepsilon$ for the ReLU processing illustrated in FIG. 6, thereby generation of continuous 0s is suppressed.

The ReLU processing illustrated in FIG. 8 may be referred to as leaky ReLU processing.

As represented by Expressions 4 and 5 below, the input value is output as it is in a region where a value of the input x is positive, and a value obtained by multiplying the input value by $\varepsilon$ is output in a region where the input value x is negative.

$$\text{ReLU}^{(1)}(x) = \begin{cases} x \ (x > 0) \\ \varepsilon x \ (x \leq 0) \end{cases}$$ Expression 4

$$\text{ReLU}^{(1)\prime}(z) = \begin{cases} 1 \ (x > 0) \\ \varepsilon \ (x \leq 0) \end{cases}$$ Expression 5

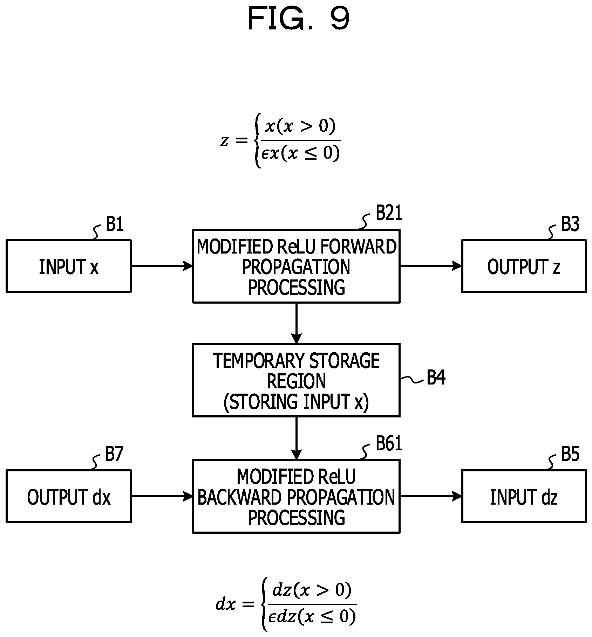

FIG. 9 illustrates second forward propagation processing and second backward propagation processing of the ReLU in the example of the embodiment.

The forward propagation processing and the backward propagation processing illustrated in FIG. 9 are similar to the forward propagation processing and the backward propagation processing illustrated in FIG. 7.

However, modified ReLU forward propagation processing illustrated in FIG. 9 (see reference sign B21) is executed with Expression 6 below.

$$z = \begin{cases} x \ (x > 0) \\ \varepsilon x \ (x \leq 0) \end{cases}$$ Expression 6

Modified ReLU backward propagation processing illustrated in FIG. 9 (see reference sign B61) is executed with Expression 7 below.

$$dx = \begin{cases} dz \ (x > 0) \\ \varepsilon dz \ (x \leq 0) \end{cases}$$ Expression 7

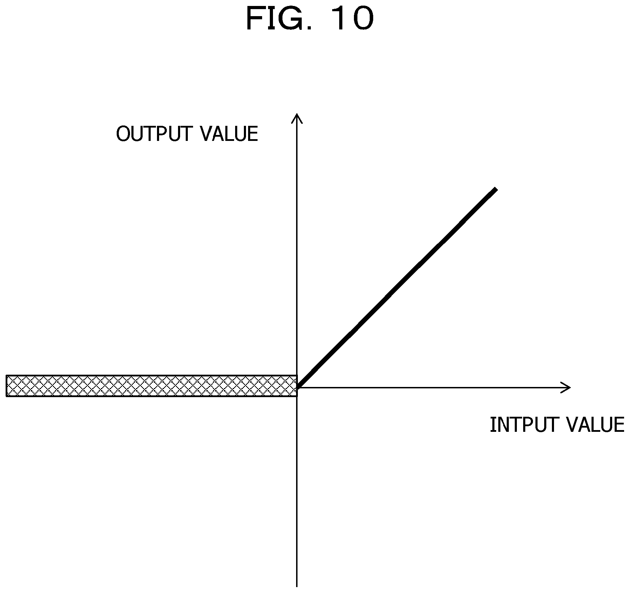

FIG. 10 illustrates third ReLU operation processing in the example of the embodiment.

Although the ReLU processing illustrated in FIG. 10 is similar to the ReLU processing illustrated in FIG. 6 in the positive region, the output value is, in the negative region, randomly selected from among three values of -$\varepsilon$, 0, and

+ε (see shaded part in FIG. 10).

For example, the output value is represented by Expressions 8 and 9 below.

$$\mathrm{ReLU}^{(2)}(x) = \begin{cases} x \ (x > 0) \\ -\epsilon, 0, +\epsilon \ (x \leq 0) \end{cases} \qquad \text{Expression 8}$$

$$\mathrm{ReLU}^{(2)\prime}(z) = \begin{cases} 1 \ (x > 0) \\ -\epsilon, 0, +\epsilon \ (x \leq 0) \end{cases} \qquad \text{Expression 9}$$

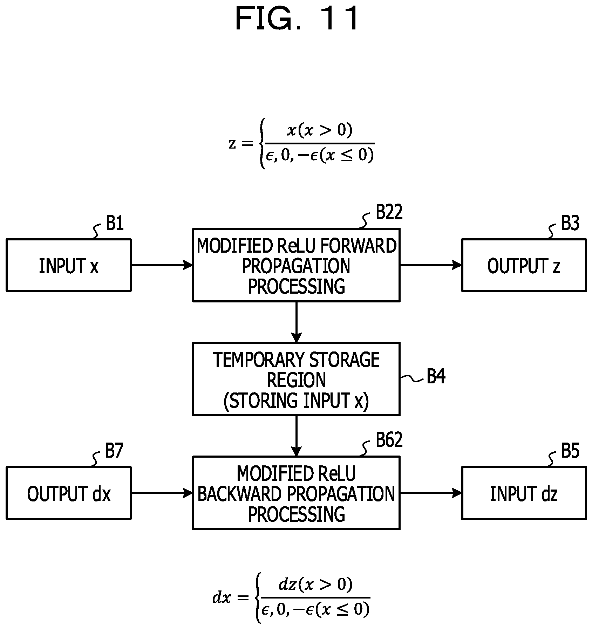

FIG. 11 illustrates third forward propagation processing and third backward propagation processing of the ReLU in the example of the embodiment.

The forward propagation processing and the backward propagation processing illustrated in FIG. 11 are similar to the forward propagation processing and the backward propagation processing illustrated in FIG. 7.

However, modified ReLU forward propagation processing illustrated in FIG. 11 (see reference sign B22) is performed with the following Expression 10.

$$z = \begin{cases} x \ (x > 0) \\ -\epsilon, 0, +\epsilon \ (x \leq 0) \end{cases} \qquad \text{Expression 10}$$

Modified ReLU backward propagation processing illustrated in FIG. 11 (see reference sign B62) is executed with Expression 11 below.

$$dx = \begin{cases} dz \ (x > 0) \\ -\epsilon, 0, +\epsilon (x \leq 0) \end{cases} \qquad \text{Expression 11}$$

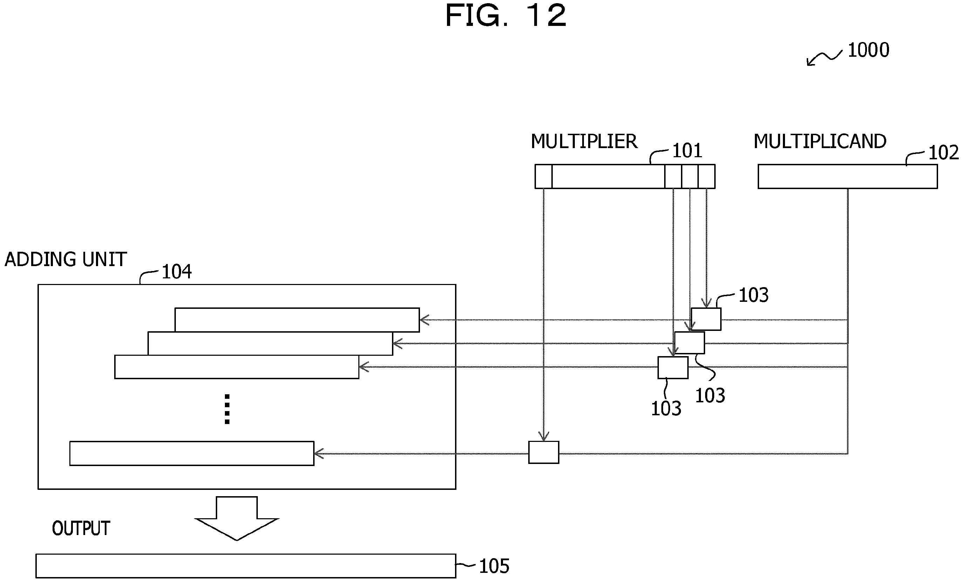

FIG. 12 is a block diagram schematically illustrating an example of the configuration of a multiplying unit 1000 in the example of the embodiment.

Although the operation result of the ReLU [(1)] is able to be one of various values, the operation result of the ReLU [(2)] is one of only three values, -ε, 0 and +ε. For this reason, in the example of the embodiment, input to the multiplying unit 1000 is also considered.

The multiplying unit 1000 of a digital computer obtains partial products of the multiplicand and each of bits of the multiplier in a manner of calculation by writing and obtains the sum of the partial products.

The multiplying unit 1000 generates a single output 105 for two inputs of a multiplier 101 and a multiplicand 102. The multiplying unit 1000 includes a plurality of selectors 103 and an adding unit 104. The selectors 103 may perform selection between a 0-bit string or a shift-side input and may be implemented by an AND gate.

Regarding the content of the multiplication, the bit string of the multiplicand 102 is shifted by single-bit and input to the adding unit 104. In so doing, whether a bit string of 0 is input or a bit string of the multiplicand 102 is input is determined depending on the content of each bit of the multiplier 101. Then, the sum of the input bit strings is obtained, thereby a product is obtained.

The small positive number and the small negative number may be input to the multiplicand 102 side of the multiplying unit 1000. The reason for this is that a large amount of 0s are generated in the multiplying unit 1000 and power is reduced more than required when the small positive number and the small negative number are specified values (for example, in the form of continuous bits of 1) and the multiplying unit 1000 has a specific internal configuration (for example, the multiplying unit 1000 using a Booth algorithm).

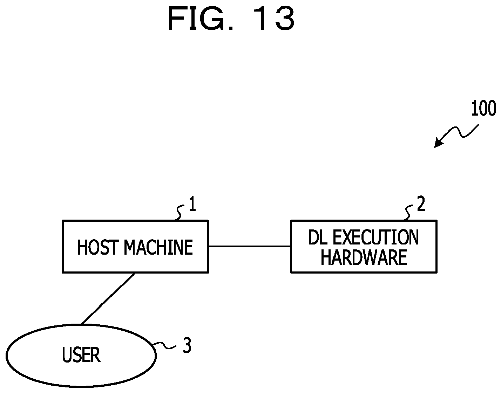

FIG. 13 is a block diagram schematically illustrating an example of the configuration of a calculation processing system 100 in the example of the embodiment.

The calculation processing system 100 includes a host machine 1 and DL execution hardware 2. The host machine 1 and the DL execution hardware 2 are operated by a user 3.

The user 3 couples to the host machine 1, operates the DL execution hardware 2, and causes deep learning to be executed in the DL execution hardware 2.

The host machine 1, which is an example of a calculation processing unit, generates a program to be executed by the DL execution hardware 2 in accordance with an instruction from the user 3 and transmits the generated program to the DL execution hardware 2.

The DL execution hardware 2 executes the program transmitted from the host machine 1 and generates data of an execution result.

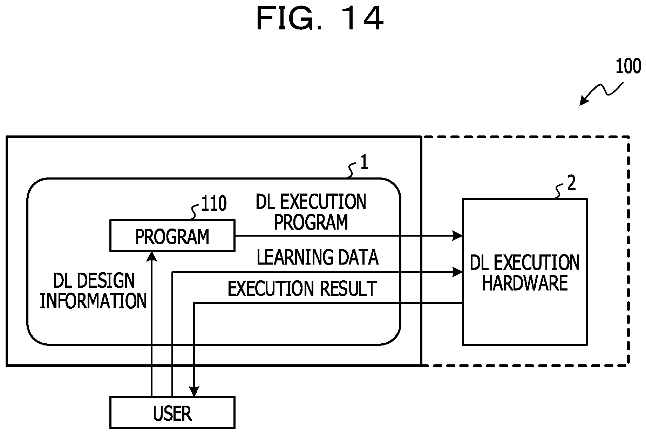

FIG. 14 is block diagram illustrating DL processing in the calculation processing system 100 illustrated in FIG. 13.

The user 3 inputs DL design information to a program 110 in the host machine 1. The host machine 1 inputs the program 110 to which the DL design information has been input to the DL execution hardware 2 as a DL execution program. The user 3 inputs learning data to the DL execution hardware 2. The DL execution hardware 2 presents the execution result to the user 3 based on the DL execution program and the learning data.

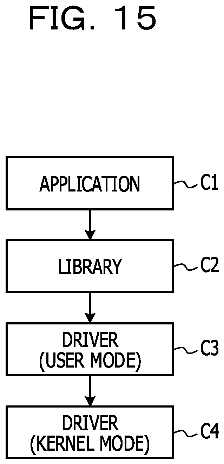

FIG. 15 is a flowchart illustrating the DL processing in the host machine 1 illustrated in FIG. 13.

As indicated by a reference sign C1, a user interface with the user 3 is implemented in an application. The application accepts input of the DL design information from the user 3 and displays an input result. The function of DL execution in the application is implemented by using the function of a library in a lower layer.

As indicated by reference sign C2, the implementation of the application in the host machine 1 is assisted in the library. The function relating to the DL execution is provided at the library.

As indicated by reference sign C3, a driver of a user mode is usually called from the library. The driver of the user mode may be directly read from the application. The driver of the user mode functions as a compiler to create program code for the DL execution hardware 2.

As indicated by reference sign C4, a driver of a kernel mode is called from the driver of the user mode and communicates with the DL execution hardware 2. For direct access to hardware, this driver is implemented as the driver of the kernel mode.

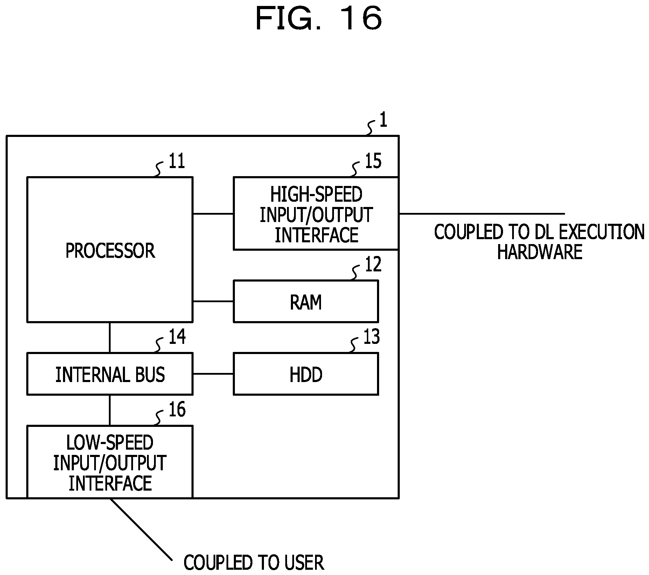

FIG. 16 is a block diagram schematically illustrating an example of a hardware configuration of the host machine 1 illustrated in FIG. 13.

The host machine 1 includes a processor 11, a random-access memory (RAM) 12, a hard disk drive (HDD) 13, an internal bus 14, a high-speed input/output interface 15, and a low-speed input/output interface 16.

The RAM 12 stores data and programs to be executed by the processor 11. The type of the RAM 12 may be, for example, a double data rate 4 synchronous dynamic random-access memory (DDR4 SDRAM).

The HDD 13 stores data and programs to be executed by the processor 11. The HDD 13 may be a solid state drive (SSD), a storage class memory (SCM), or the like.

The internal bus 14 couples the processor 11 to peripheral components slower than the processor 11 and relays communication.

The high-speed input/output interface 15 couples the processor 11 to the DL execution hardware 2 disposed externally to the host machine 1. The high-speed input/output interface 15 may be, for example, a peripheral component interconnect express (PCI Express).

The low-speed input/output interface 16 realizes coupling to the host machine 1 by the user 3. The low-speed input/output interface 16 is coupled to, for example, a keyboard and a mouse. The low-speed input/output interface 16 may be coupled to the user 3 through a network using Ethernet (registered trademark).

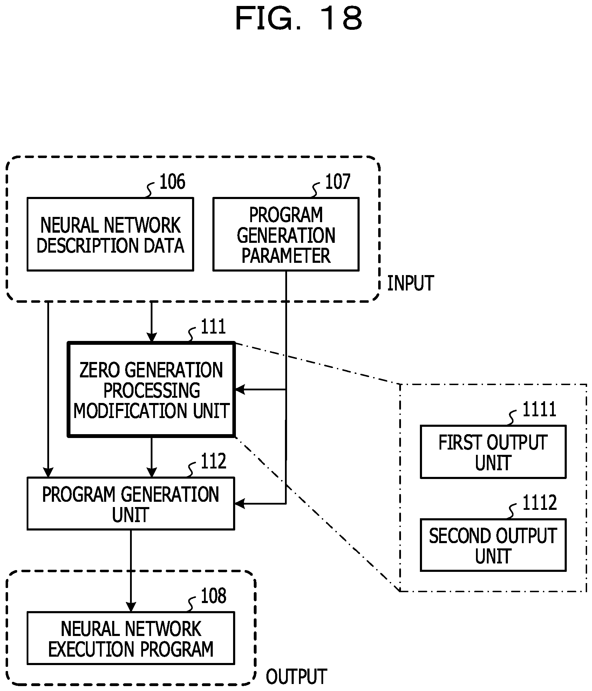

The processor 11 is a processing unit that exemplarily performs various types of control and various operations. The processor 11 realizes various functions when an operating system (OS) and programs stored in the RAM 12 are executed. For example, as will be described later with reference to FIG. 18, the processor 11 may function as zero generation processing modification unit 111 and a program generation unit 112.

The programs to realize the functions as the zero generation processing modification unit 111 and the program generation unit 112 may be provided in a form in which the programs are recorded in a computer readable recording medium such as, for example, a flexible disk, a compact disk (CD, such as a CD read only memory (CD-ROM), a CD readable (CD-R), or a CD rewritable (CD-RW)), a digital versatile disk (DVD, such as a digital DVD read only memory (DVD-ROM), a DVD random access memory (DVD-RAM), a DVD recordable (DVD-R, DVD+R), a DVD rewritable (DVD-RW, DVD+RW), or a high-definition DVD (HD DVD)), a Blu-ray disk, a magnetic disk, an optical disk, or a magneto-optical disk. The computer (the processor 11 according to the present embodiment) may read the programs from the above-described recording medium through a reading device (not illustrated) and transfer and store the read programs to an internal recording device or an external recording device. The programs may be recorded in a storage device (recording medium) such as, for example, a magnetic disk, an optical disk, or a magneto-optical disk and provided from the storage device to the computer via a communication path.

When the functions of the zero generation processing modification unit 111 and the program generation unit 112 are realized, the programs stored in the internal storage device (the RAM 12 according to the present embodiment) may be executed by the computer (the processor 11 according to the present embodiment). The computer may read and execute the programs recorded in the recording medium.

The processor 11 controls operation of the entire host machine 1. The processor 11 may be a multiprocessor. The processor 11 may be any one of, for example, a central processing unit (CPU), a microprocessor unit (MPU), a digital signal processor (DSP), an application specific integrated circuit (ASIC), a programmable logic device (PLD), or a field-programmable gate array (FPGA). The processor 11 may be a combination of two or more elements of a CPU, an MPU, a DSP, an ASIC, a PLD, and an FPGA.

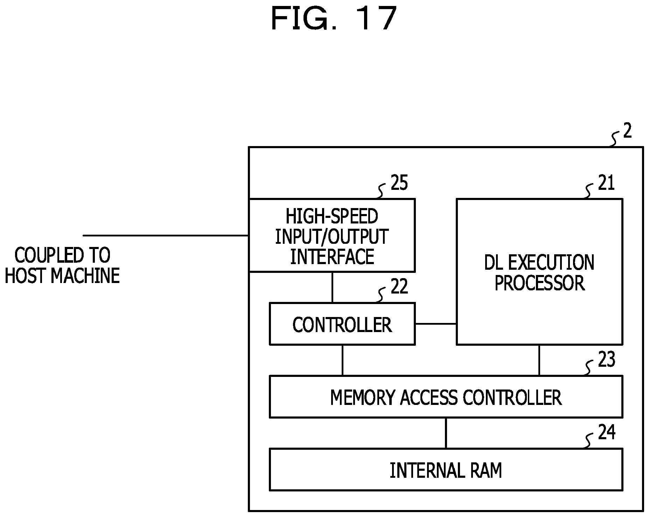

FIG. 17 is a block diagram schematically illustrating an example of a hardware configuration of the DL execution hardware 2 illustrated in FIG. 13.

The DL execution hardware 2 includes a DL execution processor 21, a controller 22, a memory access controller 23, an internal RAM 24, and a high-speed input/output interface 25.

The controller 22 drives the DL execution processor 21 or transfers the programs and data to the internal RAM 24 in accordance with a command from the host machine 1.

The memory access controller 23 selects a signal from the DL execution processor 21 and the controller 22 and performs memory access in accordance with a program for memory access.

The internal RAM 24 stores the programs executed by the DL execution processor 21, data to be processed, and data of results of the processing. The internal RAM 24 may be a DDR4 SDRAM, a faster graphics double data rate 5 SDRAM (GDDR5 SDRAM), a wider band high bandwidth memory 2 (HBM2), or the like.

The high-speed input/output interface 25 couples the DL execution processor 21 to the host machine 1. The protocol of the high-speed input/output interface 25 may be, for example, PCI Express.

The DL execution processor 21 executes deep learning processing based on the programs and data supplied from the host machine 1.

The DL execution processor 21 is a processing unit that exemplarily performs various types of control and various operations. The DL execution processor 21 realizes various functions when an OS and programs stored in the internal RAM 24 are executed.

The programs to realize the various functions may be provided in a form in which the programs are recorded in a computer readable recording medium such as, for example, a flexible disk, a CD (such as a CD-ROM, a CD-R, or a CD-RW), a DVD (such as a DVD-ROM, a DVD-RAM, a DVD-R or DVD+R, a DVD-RW or DVD+RW, or an HD DVD), a Blu-ray disk, a magnetic disk, an optical disk, or a magneto-optical disk. The computer (the processor 11 according to the present embodiment) may read the programs from the above-described recording medium through a reading device (not illustrated) and transfer and store the read programs to an internal recording device or an external recording device. The programs may be recorded in a storage device (recording medium) such as, for example, a magnetic disk, an optical disk, or a magneto-optical disk and provided from the storage device to the computer via a communication path.

When the functions of the DL execution processor 21 are realized, the programs stored in the internal storage device (the internal RAM 24 according to the present embodiment) may be executed by the computer (the DL execution processor 21 according to the present embodiment). The computer may read and execute the programs recorded in the recording medium.

The DL execution processor 21 controls operation of the entire DL execution hardware 2. The DL execution processor 21 may be a multiprocessor. The DL execution processor 21 may be any one of, for example, a CPU, an MPU, a DSP, an ASIC, a PLD, and an FPGA. The DL execution processor 21 may be a combination of two or more elements of a CPU, an MPU, a DSP, an ASIC, a PLD, and an FPGA.

FIG. 18 is a block diagram schematically illustrating an example of a functional configuration of the host machine 1 illustrated in FIG. 13.

As illustrated in FIG. 18, the processor 11 of the host machine 1 functions as the zero generation processing modification unit 111 and the program generation unit 112.

The program generation unit 112 generates a neural network execution program 108 to be executed in the DL execution hardware 2 based on input of neural network description data 106 and a program generation parameter 107.

The zero generation processing modification unit 111 modifies content of the neural network description data 106, thereby modifying content of the ReLU operation. As illustrated in FIG. 18, the zero generation processing modification unit 111 functions as a first output unit 1111 and a second output unit 1112.

As illustrated in FIGs. 8 and 10, the first output unit 1111 compares an input value with a boundary value (for example, 0) and outputs a value equal to the input value when the input value exceeds the boundary value.

As illustrated in FIGs. 8 and 10, in a calculation of a rectified linear function by which a certain output value is output when an input value is smaller than or equal to a boundary value (for example, "ReLU operation"), the second output unit 1112 outputs a multiple of the small value $\varepsilon$ larger than 0 when the input value is smaller than or equal to the boundary value.

As illustrated in, for example, FIG. 8, the second output unit 1112 may output a product of an input value and the small value $\varepsilon$ as an output value. As has been described with reference to, for example, FIG. 12, the second output unit 1112 may output an output value by inputting to the multiplying unit 1000 the input value as a multiplier and the small value $\varepsilon$ as a multiplicand.

As illustrated in, for example, FIG. 10, regarding the small value $\varepsilon$, the second output unit 1112 may output $-\varepsilon$, 0, or $+\varepsilon$ as an output value.

[B-2] Example of the Operation

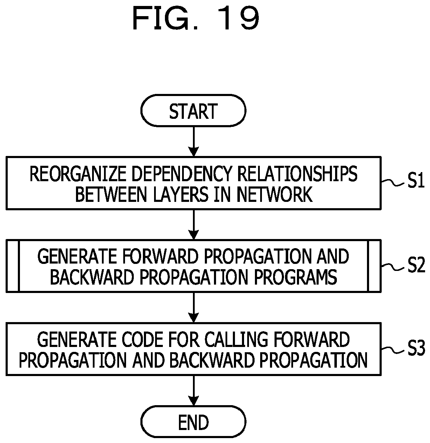

The processing for generating programs in the host machine 1 illustrated in FIG. 13 is described with reference to a flowchart illustrated in FIG. 19.

The program generation unit 112 reorganizes the dependency relationships between layers in the network (step S1). The program generation unit 112 rearranges the layers in the order of the forward propagation and manages the layers as Layer [0], Layer [1], ..., Layer [L - 1].

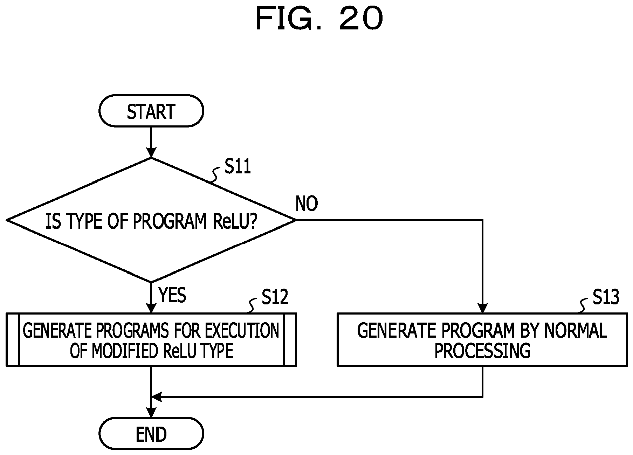

The program generation unit 112 generates forward propagation and backward propagation programs for each of Layer [0], Layer [1], ..., Layer [L - 1] (step S2). The details of the processing in step S2 will be described later with reference to FIG. 20.

The program generation unit 112 generates code for calling the forward propagation and the backward propagation of Layer [0], Layer [1], ..., Layer [L - 1] (Step S3). Then, the processing for generating the programs ends.

Next, the details of the processing for generating the programs for the forward propagation and the backward propagation in the host machine 1 illustrated in FIG. 13 (step S2 illustrated in FIG. 19) are described with reference to a flowchart illustrated in FIG. 20.

The program generation unit 112 determines whether the type of the programs to be generated is ReLU (step S11).

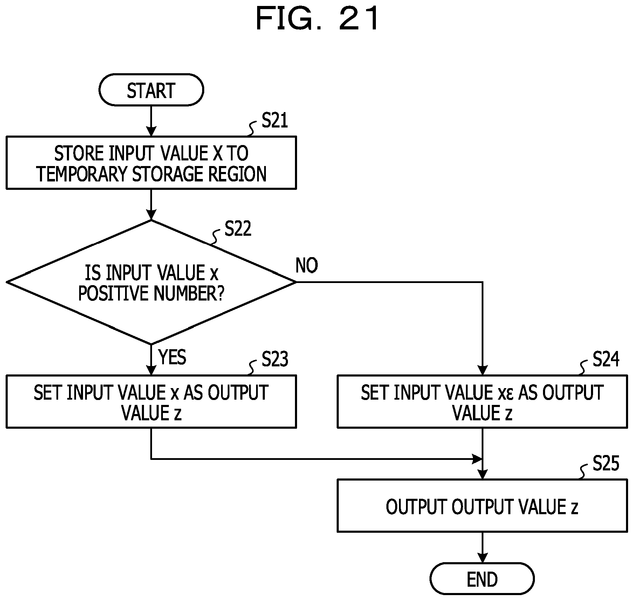

When the type of the program to be generated is the ReLU (see a "Yes" route in step S11), the program generation unit 112 generates programs for executing the processing for the modified ReLU in accordance with the output from the zero generation processing modification unit 111 (step S12). Then, the processing for generating the forward propagation and backward propagation programs ends. The output from the zero generation processing modification unit 111 may be realized by processing which will be described later with reference to any one of flowcharts illustrated in FIGs. 21 to 24.

In contrast, when the type of the program to be generated is not the ReLU (see a "No" route in step S11), the program generation unit 112 generates the program in normal processing (step S13). Then, the processing of generating the forward propagation and backward propagation programs ends.

Next, the details of the forward propagation processing of the second ReLU operation (step S12 illustrated in FIG. 20) in the host machine 1 illustrated in FIG. 13 are described with reference to the flowchart illustrated in FIG. 21.

The zero generation processing modification unit 111 stores the input value x to the temporary storage region (step S21).

The zero generation processing modification unit 111 determines whether the input value x is a positive number (step S22).

When the input value x is a positive number (see a "Yes" route in step S22), the first output unit 1111 of the zero generation processing modification unit 111 sets the input value x as the output value z (step S23). The processing then proceeds to step S25.

In contrast, when the input value x is not a positive number (see a "No" route in step S22), the second output unit 1112 of the zero generation processing modification unit 111 sets an input value $x_\varepsilon$ as the output value z (step S24).

The zero generation processing modification unit 111 outputs the output value z (step S25). Then, the forward propagation processing of the second ReLU operation ends.

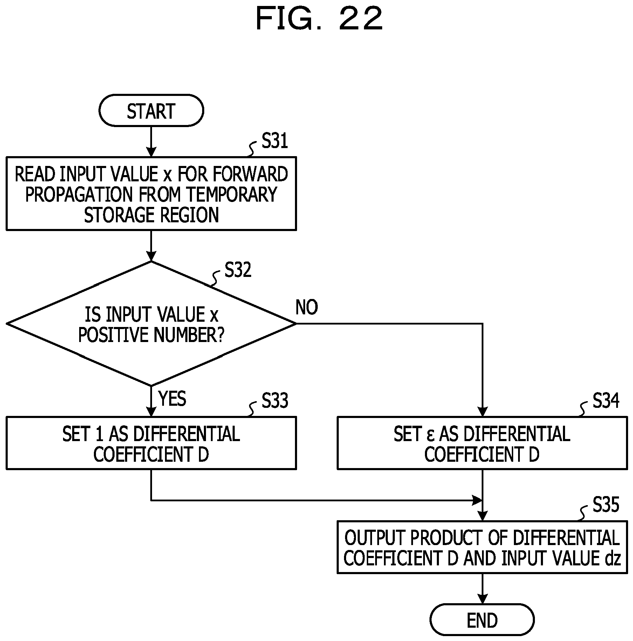

Next, the details of the backward propagation processing of the second ReLU operation (step S12 illustrated in FIG. 20) in the host machine 1 illustrated in FIG. 13 are described with reference to the flowchart illustrated in FIG. 22.

The zero generation processing modification unit 111 reads the input value x for the forward propagation from the temporary storage region (step S31).

The zero generation processing modification unit 111 determines whether the input value x is a positive number (step S32).

When the input value x is a positive number (see a "Yes" route in step S32), the first output unit 1111 of the zero generation processing modification unit 111 sets 1 as a differential coefficient D (step S33). The processing then proceeds to step S35.

In contrast, when the input value x is not a positive number (see a "No" route in step S32), the second output unit 1112 of the zero generation processing modification unit 111 sets $\varepsilon$ as the differential coefficient D (step S34).

The zero generation processing modification unit 111 outputs a product of the differential coefficient D and an input value dz (step S35). Then, the backward propagation processing of the second ReLU operation ends.

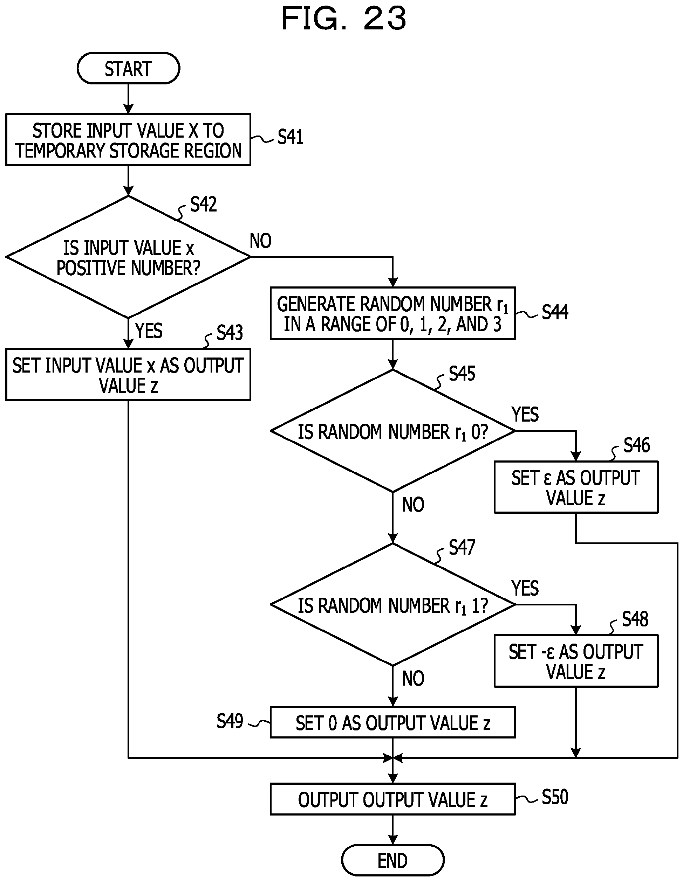

Next, the details of the forward propagation processing of the third ReLU operation (step S12 illustrated in FIG. 20) in the host machine 1 illustrated in FIG. 13 are described with reference to the flowchart illustrated in FIG. 23.

The zero generation processing modification unit 111 stores the input value x to the temporary storage region (step S41).

The zero generation processing modification unit 111 determines whether the input value x is a positive number (step S42).

When the input value x is a positive number (see a "Yes" route in step S42), the first output unit 1111 of the zero generation processing modification unit 111 sets the input value x as the output value z (step S43). The processing then proceeds to step S50.

When the input value x is not a positive number (see a "No" route in step S42), the second output unit 1112 of the zero generation processing modification unit 111 generates a random numbers $r_1$ in a range of 0, 1, 2, and 3 (step S44).

The second output unit 1112 determines whether the random number $r_1$ is 0 (step S45).

When the random number $r_1$ is 0 (see a "Yes" route in step S45), the second output unit 1112 sets the $\varepsilon$ as the output value z (step S46). The processing then proceeds to step S50.

In contrast, when the random number $r_1$ is not 0 (see a "No" route in step S45), the second output unit 1112 determines whether the random number $r_1$ is 1 (step S47).

When the random number $r_1$ is 1 (see a "Yes" route in step S47), the second output unit 1112 sets the $-\varepsilon$ as the output value z (step S48). The processing then proceeds to step S50.

In contrast, when the random number $r_1$ is not 1 (see a "No" route in step S47), the second output unit 1112 sets 0 as the output value z (step S49).

The zero generation processing modification unit 111 outputs the output value z (step S50). Then, the forward propagation processing of the third ReLU operation ends.

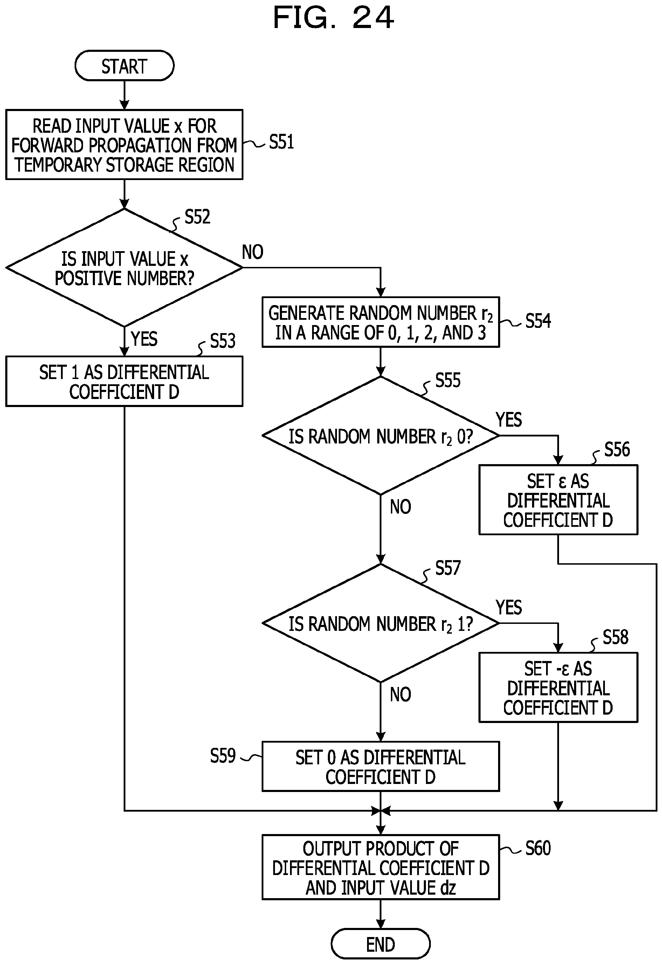

Next, the details of the backward propagation processing of the third ReLU operation (step S12 illustrated in FIG. 20) in the host machine 1 illustrated in FIG. 13 are described with reference to the flowchart illustrated in FIG. 24.

The zero generation processing modification unit 111 reads the input value x for the forward propagation from the temporary storage region (step S51).

The zero generation processing modification unit 111 determines whether the input value x is a positive number (step S52).

When the input value x is a positive number (see a "Yes" route in step S52), the first output unit 1111 of the zero generation processing modification unit 111 sets 1 as the differential coefficient D (step S53). The processing then proceeds to step S60.

When the input value x is not a positive number (see a "No" route in step S52), the second output unit 1112 of the zero generation processing modification unit 111 generates a random numbers $r_2$ in a range of 0, 1, 2, and 3 (step S54).

The second output unit 1112 determines whether the random number $r_2$ is 0 (step S55).

When the random number $r_2$ is 0 (see a "Yes" route in step S55), the second output unit 1112 sets the $\varepsilon$ as the differential coefficient D (step S56). The processing then proceeds to step S60.

In contrast, when the random number $r_2$ is not 0 (see a No route in step S55), the second output unit 1112 determines whether the random number $r_2$ is 1 (step S57).

When the random number $r_2$ is 1 (see a "Yes" route in step S57), the second output unit 1112 sets the $-\varepsilon$ as the differential coefficient D (step S58). The processing then proceeds to step S60.

In contrast, when the random number $r_2$ is not 1 (see a "No" route in step S57), the second output unit 1112 sets 0 as the differential coefficient D (step S59).

The zero generation processing modification unit 111 outputs a product of the differential coefficient D and an input value dz (step S60). Then, the backward propagation processing of the third ReLU operation ends.

[B-3] Effects

With the host machine 1 in the example of the above-described embodiment, for example, the following effects may be obtained.

The first output unit 1111 compares the input value with the boundary value and outputs a value equal to the input value when the input value exceeds the boundary value. In the ReLU operation by which a certain output value is output when the input value is smaller than or equal to the boundary value, the second output unit 1112 outputs a multiple of the small value $\varepsilon$ larger than 0 when the input value is smaller than or equal to the boundary value.

Thus, the voltage drop of the processor 11 may be suppressed without increasing the power consumption. For example, without changing the quality of learning, the generation of the 0 value may be suppressed and power variation may be suppressed. Although the power is increased in the ReLU operation and the subsequent calculation, the reference voltage is reduced in other calculations. Thus, the DL may be executed with low power. For example, power variation may be suppressed and setting of a high voltage is not necessarily required.

The second output unit 1112 outputs the product of the input value and the small value $\varepsilon$ as the output value.

Thus, the likelihood of outputting of a 0 value may be reduced.

The second output unit 1112 outputs the output value by inputting to the multiplying unit 1000 the input value as a multiplier and the small value $\varepsilon$ as a multiplicand.

Thus, the power reduction in the multiplying unit 1000 may be suppressed.

Regarding the small value $\varepsilon$, the second output unit 1112 outputs $-\varepsilon$, 0, or $+\varepsilon$ as an output value.

Thus, the output value of the ReLU operation is able to be limited, thereby the DL execution program may be efficiently generated.

[C] Others

The disclosed technology is not limited to the aforementioned embodiment but may be carried out with various modifications without departing from the scope of the present invention as defined by the accompanying claims. Each configuration and each process of the present embodiment may be selected as desired or may be combined as appropriate. The invention is defined by the appended claims.

**Claims**

1. A calculation processing apparatus comprising:

    a first output unit (1111) configured to compare an input value with a boundary value and output, in a calculation of a rectified linear function in a learning process of a deep neural network, a value equal to the input value when the input value exceeds the boundary value; and
    a second output unit (1112) configured to output, in the calculation of the rectified linear function by which a certain output value is output in a case where the input value is smaller than or equal to the boundary value, the certain output value,
    **characterized in that** the second output unit (1112) is configured to randomly output one of -$\varepsilon$, 0, or +$\varepsilon$ as the certain output value, wherein $\varepsilon$ is a small value.

2. A program for causing a computer to execute a process, the process comprising:

    comparing an input value with a boundary value and outputting, in a calculation of a rectified linear function in a learning process of a deep neural network, a value equal to the input value when the input value exceeds the boundary value; and
    outputting, in the calculation of the rectified linear function by which a certain output value is output in a case where the input value is smaller than or equal to the boundary value, the certain output value,
    **characterized in that** as the certain output value, one of -$\varepsilon$, 0, or +$\varepsilon$ is randomly output, wherein $\varepsilon$ is a small value.

3. A method of controlling a calculation processing unit, the method comprising:

    comparing an input value with a boundary value and outputting, in a calculation of a rectified linear function in a learning process of a deep neural network, a value equal to the input value when the input value exceeds the boundary value; and
    outputting, in the calculation of the rectified linear function by which a certain output value is output in a case where the input value is smaller than or equal to the boundary value, the certain output value
    **characterized in that** as the certain output value, one of -$\varepsilon$, 0, or +$\varepsilon$ is randomly output, wherein $\varepsilon$ is a small value.

**Patentansprüche**

1. Berechnungsverarbeitungsvorrichtung, umfassend:

    eine erste Ausgabeeinheit (1111), die dazu ausgebildet ist, einen Eingabewert mit einem Grenzwert zu vergleichen und bei einer Berechnung einer gleichgerichteten linearen Funktion in einem Lernprozess eines tiefen neuronalen Netzes einen Wert auszugeben, der gleich dem Eingabewert ist, wenn der Eingabewert den Grenzwert überschreitet; und
    eine zweite Ausgabeeinheit (1112), die dazu ausgebildet ist, bei der Berechnung der gleichgerichteten linearen Funktion, durch die ein bestimmter Ausgabewert ausgegeben wird, in einem Fall, in dem der Eingabewert kleiner oder gleich dem Grenzwert ist, den bestimmten Ausgabewert auszugeben,
    **dadurch gekennzeichnet, dass** die zweite Ausgabeeinheit (1112) dazu ausgebildet ist, zufällig eines von -$\varepsilon$, 0 oder +$\varepsilon$ als den bestimmten Ausgabewert auszugeben, wobei $\varepsilon$ ein kleiner Wert ist.

2. Programm, um einen Computer zu veranlassen, einen Prozess auszuführen, wobei der Prozess umfasst:

Vergleichen eines Eingabewerts mit einem Grenzwert, und Ausgeben, bei einer Berechnung einer gleichgerichteten linearen Funktion in einem Lernprozess eines tiefen neuronalen Netzes, eines Werts, der gleich dem Eingabewert ist, wenn der Eingabewert den Grenzwert überschreitet; und

Ausgeben, bei der Berechnung der gleichgerichteten linearen Funktion, durch die ein bestimmter Ausgabewert ausgegeben wird, in einem Fall, in dem der Eingangswert kleiner oder gleich dem Grenzwert ist, des bestimmten Ausgabewerts,

**dadurch gekennzeichnet, dass** als bestimmter Ausgabewert zufällig eines von -$\varepsilon$, 0 oder +$\varepsilon$ ausgegeben wird, wobei $\varepsilon$ ein kleiner Wert ist.

3. Verfahren zur Steuerung einer Berechnungsverarbeitungseinheit, wobei das Verfahren umfasst:

Vergleichen eines Eingabewerts mit einem Grenzwert, und Ausgeben, bei einer Berechnung einer gleichgerichteten linearen Funktion in einem Lernprozess eines tiefen neuronalen Netzes, eines Werts, der gleich dem Eingabewert ist, wenn der Eingabewert den Grenzwert überschreitet; und

Ausgeben, bei der Berechnung der gleichgerichteten linearen Funktion, durch die ein bestimmter Ausgabewert ausgegeben wird, in einem Fall, in dem der Eingangswert kleiner oder gleich dem Grenzwert ist, des bestimmten Ausgabewerts,

**dadurch gekennzeichnet, dass** als bestimmter Ausgabewert zufällig eines von -$\varepsilon$, 0 oder +$\varepsilon$ ausgegeben wird, wobei $\varepsilon$ ein kleiner Wert ist.


**Revendications**

1. Un appareil de traitement de calcul comprenant :

une première unité de sortie (1111) configurée pour comparer une valeur d'entrée à une valeur limite et émettre, dans un calcul d'une fonction linéaire rectifiée dans un processus d'apprentissage d'un réseau neuronal profond, une valeur égale à la valeur d'entrée lorsque la valeur d'entrée dépasse la valeur limite ; et

une deuxième unité de sortie (1112) configurée pour émettre, dans le calcul de la fonction linéaire rectifiée par laquelle une certaine valeur de sortie est émise dans un cas où la valeur d'entrée est inférieure ou égale à la valeur limite, la certaine valeur de sortie,

**caractérisé en ce que** la deuxième unité de sortie (1112) est configurée pour émettre de manière aléatoire une valeur parmi -$\varepsilon$, 0 ou +$\varepsilon$ comme valeur de sortie certaine, dans laquelle $\varepsilon$ est une petite valeur.

2. Un programme pour amener un ordinateur à exécuter un processus, le processus comprenant :

la comparaison d'une valeur d'entrée avec une valeur limite et l'émission, dans un calcul d'une fonction linéaire rectifiée dans un processus d'apprentissage d'un réseau neuronal profond, d'une valeur égale à la valeur d'entrée lorsque la valeur d'entrée dépasse la valeur limite ; et

l'émission, dans le calcul de la fonction linéaire rectifiée par laquelle une certaine valeur de sortie est émise dans un cas où la valeur d'entrée est inférieure ou égale à la valeur limite, de la certaine valeur de sortie,

**caractérisé en ce que**, comme valeur de sortie certaine, une valeur parmi -$\varepsilon$, 0 ou +$\varepsilon$ est émise de manière aléatoire, dans laquelle $\varepsilon$ est une petite valeur.

3. Un procédé de commande d'une unité de traitement de calcul, le procédé comprenant :

la comparaison d'une valeur d'entrée avec une valeur limite et l'émission, dans un calcul d'une fonction linéaire rectifiée dans un processus d'apprentissage d'un réseau neuronal profond, d'une valeur égale à la valeur d'entrée lorsque la valeur d'entrée dépasse la valeur limite ; et

l'émission, dans le calcul de la fonction linéaire rectifiée par laquelle une certaine valeur de sortie est émise dans un cas où la valeur d'entrée est inférieure ou égale à la valeur limite, de la certaine valeur de sortie,

**caractérisé en ce que**, comme valeur de sortie certaine, une valeur parmi -$\varepsilon$, 0 ou +$\varepsilon$ est émise de manière aléatoire, dans laquelle $\varepsilon$ est une petite valeur.

# FIG. 1

NEURONAL CELL (NEURON)

NEURAL NETWORK

MODELING

EP 3 686 733 B1

# FIG. 2

# FIG. 3

TIME ELAPASED

# FIG. 4

TIME ELAPASED

```
FMA %fr0,  %fr32, %fr64
FMA %fr1,  %fr33, %fr65
FMA %fr2,  %fr34, %fr66
FMA %fr3,  %fr35, %fr67
FMA %fr4,  %fr36, %fr68
FMA %fr5,  %fr37, %fr69
FMA %fr6,  %fr38, %fr70
FMA %fr7,  %fr39, %fr71
FMA %fr8,  %fr40, %fr72
FMA %fr9,  %fr41, %fr73
FMA %fr10, %fr42, %fr74
FMA %fr11, %fr43, %fr75
FMA %fr12, %fr44, %fr76
FMA %fr13, %fr45, %fr77
FMA %fr14, %fr46, %fr78
FMA %fr15, %fr47, %fr79
FMA %fr16, %fr48, %fr80
FMA %fr17, %fr49, %fr81
FMA %fr18, %fr50, %fr82
FMA %fr19, %fr51, %fr83
```

A1

# FIG. 5

POWER (IMAGE)

TIME ELAPASED

# FIG. 6

OUTPUT VALUE

INTPUT VALUE

# FIG. 7

$$z = \begin{cases} x(x > 0) \\ \overline{0(x \leq 0)} \end{cases}$$

B1
INPUT x

B2
MODIFIED ReLU FORWARD PROPAGATION PROCESSING

B3
OUTPUT z

B4
TEMPORARY STORAGE REGION (STORING INPUT x)

B7
OUTPUT dx

B6
MODIFIED ReLU BACKWARD PROPAGATION PROCESSING

B5
INPUT dz

$$dx = \begin{cases} dz(x > 0) \\ \overline{0(x \leq 0)} \end{cases}$$

# FIG. 8

# FIG. 9

$$z = \begin{cases} x(x > 0) \\ \epsilon x(x \le 0) \end{cases}$$

B1
INPUT x

B21
MODIFIED ReLU FORWARD PROPAGATION PROCESSING

B3
OUTPUT z

B4
TEMPORARY STORAGE REGION (STORING INPUT x)

B7
OUTPUT dx

B61
MODIFIED ReLU BACKWARD PROPAGATION PROCESSING

B5
INPUT dz

$$dx = \begin{cases} dz(x > 0) \\ \epsilon dz(x \le 0) \end{cases}$$

# FIG. 10

OUTPUT VALUE

INTPUT VALUE

# FIG. 11

$$z = \begin{cases} x(x > 0) \\ \epsilon, 0, -\epsilon(x \leq 0) \end{cases}$$

| B1 | B22 | B3 |
|---|---|---|
| INPUT x | MODIFIED ReLU FORWARD PROPAGATION PROCESSING | OUTPUT z |

TEMPORARY STORAGE REGION (STORING INPUT x) ~ B4

| B7 | B62 | B5 |
|---|---|---|
| OUTPUT dx | MODIFIED ReLU BACKWARD PROPAGATION PROCESSING | INPUT dz |

$$dx = \begin{cases} dz(x > 0) \\ \epsilon, 0, -\epsilon(x \leq 0) \end{cases}$$

FIG. 12

1000

MULTIPLICAND

102

MULTIPLIER

101

103

103

103

103

ADDING UNIT

104

OUTPUT

105

# FIG. 13

# FIG. 14

100

DL EXECUTION PROGRAM

110
PROGRAM

1

LEARNING DATA

EXECUTION RESULT

DL DESIGN
INFORMATION

2
DL EXECUTION
HARDWARE

USER

# FIG. 15

APPLICATION ~C1

LIBRARY ~C2

DRIVER
(USER MODE) ~C3

DRIVER
(KERNEL MODE) ~C4

# FIG. 16

# FIG. 17

COUPLED TO
HOST MACHINE

HIGH-SPEED INPUT/OUTPUT INTERFACE *25*

CONTROLLER *22*

DL EXECUTION PROCESSOR *21*

MEMORY ACCESS CONTROLLER *23*

INTERNAL RAM *24*

*2*

# FIG. 18

# FIG. 19

```
        ┌─────────┐
        │  START  │
        └─────────┘
             │
             ▼
┌──────────────────────────────────┐
│ REORGANIZE DEPENDENCY RELATIONSHIPS │ ～S1
│    BETWEEN LAYERS IN NETWORK        │
└──────────────────────────────────┘
             │
             ▼
┌──────────────────────────────────┐
│  GENERATE FORWARD PROPAGATION AND  │ ～S2
│  BACKWARD PROPAGATION PROGRAMS     │
└──────────────────────────────────┘
             │
             ▼
┌──────────────────────────────────┐
│  GENERATE CODE FOR CALLING FORWARD │ ～S3
│ PROPAGATION AND BACKWARD PROPAGATION │
└──────────────────────────────────┘
             │
             ▼
        ┌─────────┐
        │   END   │
        └─────────┘
```

# FIG. 20

# FIG. 21

```
          ( START )
              │
              ▼                          S21
  ┌─────────────────────────────┐
  │   STORE INPUT VALUE X TO     │
  │  TEMPORARY STORAGE REGION    │
  └─────────────────────────────┘
              │
              ▼                    S22
            ◇─────────────────◇        NO
          IS INPUT VALUE x      ──────────────┐
          POSITIVE NUMBER?                     │
            ◇─────────────────◇                │
              │ YES       S23                  │            S24
  ┌─────────────────────────────┐   ┌─────────────────────────────┐
  │  SET INPUT VALUE x AS OUTPUT │   │ SET INPUT VALUE xε AS OUTPUT │
  │          VALUE z             │   │          VALUE z             │
  └─────────────────────────────┘   └─────────────────────────────┘
              │                                │
              └────────────────────────────┐  │
                                           │  │            S25
                                  ┌─────────────────────────────┐
                                  │    OUTPUT OUTPUT VALUE z     │
                                  └─────────────────────────────┘
                                               │
                                               ▼
                                           ( END )
```

# FIG. 22

```
                    ┌─────────┐
                    │  START  │
                    └─────────┘
                         │            ╭ S31
                         ▼
        ┌────────────────────────────────────┐
        │ READ INPUT VALUE x FOR FORWARD      │
        │ PROPAGATION FROM TEMPORARY          │
        │ STORAGE REGION                      │
        └────────────────────────────────────┘
                         │
                         ▼            ╭ S32
                      ╱─────────╲
                     ╱           ╲         NO
                    ╱  IS INPUT    ╲──────────────┐
                    ╲  VALUE x      ╱             │
                    ╱  POSITIVE     ╲             │
                     ╲ NUMBER?     ╱              │
                      ╲───────────╱               │
                         │ YES                    │
                         ▼        ╭ S33           ▼        ╭ S34
        ┌────────────────────────┐   ┌────────────────────────┐
        │ SET 1 AS DIFFERENTIAL  │   │ SET ε AS DIFFERENTIAL  │
        │ COEFFICIENT D          │   │ COEFFICIENT D          │
        └────────────────────────┘   └────────────────────────┘
                     │                           │
                     └──────────────┬────────────┘
                                    ▼            ╭ S35
                    ┌────────────────────────────────┐
                    │ OUTPUT PRODUCT OF DIFFERENTIAL │
                    │ COEFFICIENT D AND INPUT VALUE dz│
                    └────────────────────────────────┘
                                    │
                                    ▼
                              ┌─────────┐
                              │   END   │
                              └─────────┘
```

# FIG. 23

```
          ┌─────────┐
          │  START  │
          └─────────┘
               │
               ▼
   ┌───────────────────────────┐
   │   STORE INPUT VALUE X TO   │──── S41
   │ TEMPORARY STORAGE REGION   │
   └───────────────────────────┘
               │
               ▼                    S42
          ◇─────────────◇
         ╱               ╲        NO
        ╱  IS INPUT VALUE x ╲──────────────┐
        ╲  POSITIVE NUMBER? ╱              │
         ╲                 ╱               ▼
          ◇─────────────◇        ┌──────────────────────────┐
               │ YES      S43    │ GENERATE RANDOM NUMBER r₁ │── S44
               ▼                 │  IN A RANGE OF 0, 1, 2, AND 3 │
   ┌───────────────────────┐    └──────────────────────────┘
   │ SET INPUT VALUE x AS OUTPUT │            │
   │       VALUE z          │                 ▼           S45
   └───────────────────────┘           ◇──────────────◇
               │                       ╱                ╲    YES
               │                      ╱ IS RANDOM NUMBER r₁ 0? ╲────────┐
               │                      ╲                ╱               │  S46
               │                       ◇──────────────◇         ┌──────────────┐
               │                            │ NO              │ SET ε AS OUTPUT │
               │                            ▼           S47   │    VALUE z     │
               │                       ◇──────────────◇       └──────────────┘
               │                      ╱                ╲    YES      │
               │                     ╱ IS RANDOM NUMBER r₁ 1? ╲───────┤
               │                     ╲                ╱               │  S48
               │                      ◇──────────────◇         ┌───────────────┐
               │                           │ NO               │ SET -ε AS OUTPUT │
               │              S49          ▼                  │    VALUE z      │
               │        ┌──────────────────────────┐         └───────────────┘
               │        │  SET 0 AS OUTPUT VALUE z  │                │
               │        └──────────────────────────┘                │
               └────────────────────┤                               │
                                     ▼                               │
                        ┌──────────────────────────┐                │
                        │  OUTPUT OUTPUT VALUE z    │──── S50        │
                        └──────────────────────────┘                │
                                     │                               │
                                     ▼                               │
                                ┌─────────┐                         │
                                │   END   │                         │
                                └─────────┘                         
```

# FIG. 24

```
              ( START )
                  |
     ┌────────────────────────────┐
     │ READ INPUT VALUE x FOR     │
     │ FORWARD PROPAGATION FROM   │── S51
     │ TEMPORARY STORAGE REGION   │
     └────────────────────────────┘
                  |
              ◇ S52                        NO
     ◇ IS INPUT VALUE x ◇───────────────────────┐
     ◇ POSITIVE NUMBER? ◇                        |
              |                    ┌─────────────────────────────┐
            YES    S53             │ GENERATE RANDOM NUMBER r₂   │── S54
     ┌──────────────────┐         │ IN A RANGE OF 0, 1, 2, AND 3│
     │ SET 1 AS         │         └─────────────────────────────┘
     │ DIFFERENTIAL     │                      |
     │ COEFFICIENT D    │                   ◇ S55              YES
     └──────────────────┘         ◇ IS RANDOM NUMBER r₂ 0? ◇────────┐
              |                              |                      S56
              |                             NO          ┌─────────────────┐
              |                                         │ SET ε AS        │
              |                              |          │ DIFFERENTIAL    │
              |                           ◇ S57         │ COEFFICIENT D   │
              |                 ◇ IS RANDOM NUMBER r₂ 1? ◇──────YES───┐
              |                              |                        S58
              |                             NO            ┌─────────────────┐
              |          S59                              │ SET -ε AS       │
              |    ┌──────────────────┐                   │ DIFFERENTIAL    │
              |    │ SET 0 AS         │                   │ COEFFICIENT D   │
              |    │ DIFFERENTIAL     │                   └─────────────────┘
              |    │ COEFFICIENT D    │
              |    └──────────────────┘
              └────────────┬──────────────────────────────┘
                  ┌──────────────────────────┐
                  │ OUTPUT PRODUCT OF        │── S60
                  │ DIFFERENTIAL COEFFICIENT D│
                  │ AND INPUT VALUE dz       │
                  └──────────────────────────┘
                           |
                        ( END )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017038104 A

- JP 11224246 A

**Non-patent literature cited in the description**

- **M. M. LAU ; K. HANN LIM.** Review of Adaptive Activation Function in Deep Neural Network. *2018 IEEE-EMBS Conference on Biomedical Engineering and Sciences (IECBES),* 2018, 686-690

- **C. NWANKPA et al.** Activation Functions: Comparison of trends in Practice and Research for Deep Learning. *ArXiv,* 08 November 2018, vol. 1811, 03378